Europäisches Patentamt

(19) European Patent Office (11) Publication number: **0 111 037**

Office européen des brevets **B1**

(12) **EUROPEAN PATENT SPECIFICATION**

(45) Date of publication of patent specification: **06.08.86** (51) Int. Cl.⁴: **F 16 H 37/04, F 16 H 57/02**

(21) Application number: **82306564.4**

(22) Date of filing: **09.12.82**

(54) Vehicle transmissions and vehicles incorporating transmissions.

(43) Date of publication of application:
**20.06.84 Bulletin 84/25**

(45) Publication of the grant of the patent:
**06.08.86 Bulletin 86/32**

(84) Designated Contracting States:
**AT BE DE FR GB IT NL SE**

(56) References cited:
**DE-A-1 630 458**
**DE-B-1 131 519**
**DE-C- 425 884**
**US-A-2 751 798**
**US-A-2 914 966**

**ATZ AUTOMOBILTECHNISCHE ZEITSCHRIFT,
vol. 82, no. 7/8, July/August 1980, pages
369-373, Stuttgart, DE. H. HÄSSLE: "Ecosplit" -
eine neue Getriebereihe für schwere
Nutzfahrzeuge"**

(73) Proprietor: **DEERE & COMPANY**
**1 John Deere Road**
**Moline Illinois 61265 (US)**

(72) Inventor: **Saemann, Karl**
**Am Rosensteiner Hang 11**
**D-6720 Speyer (DE)**
Inventor: **Weiss, Heinz**
**Volkerstrasse 24**
**D-6140 Bensheim (DE)**

(74) Representative: **Pears, David Ashley et al**
**REDDIE & GROSE 16 Theobalds Road**
**London WC1X 8PL (GB)**

EP 0 111 037 B1

## Description

The present invention is concerned broadly with a range of vehicles with transmissions of the well-known type incorporating a gearbox and two final drive reduction units transmitting power from the gearbox to a pair of road wheels, and equalizing gears preceding or incorporated in an input section of the gearbox. Such a transmission may be referred to as a transaxle. Naturally the transmission will incorporate a clutch or clutches (which may be integrated into the gearbox) and a differential (which may also be integrated into the gearbox) but the invention is not concerned with these elements.

The invention is particularly concerned with transmissions for agricultural and construction vehicles in which the load on the transmission is severe and in which it is common to provide a range of vehicles of different sizes and correspondingly different powers. A range of vehicles requires not only a range of engines but a range of transmissions adapted to the different powers and to different road wheel diameters, for example. The problem underlying the invention is to provide a transmission such that the gearbox itself can serve a range of vehicles. Since the gearbox is the most complex and expensive part of the transmission, considerable savings in cost can thereby be achieved.

A range of vehicles of the kind first referred to above is known from US 2,751,798. The equalizing gears therein are used merely to match different tyre sizes on the road wheels. The present invention is concerned with the additional problem that it is necessary to transmit different amounts of power through the gearboxes.

A more specific object of the invention is to solve the underlying problem when the powers of the range of vehicles span a 2-to-1 range, or even a greater range. For example, the lowest and highest power vehicles may have powers of 50 kW and 100 kW respectively, or 30 kW and 60 kW respectively or 60 kW and 120 kW respectively.

The invention is defined precisely in claim 1 below but its basis can be explained as follows. A step-up or step-down gear adapts the engine torque to the gearbox design torque, and may therefore be called an equalizing gear. In a range of vehicles there may be one vehicle which has no equalizing gear although, as in the example to be described in detail below, all vehicles may have an equalizing gear. At least the largest or most powerful vehicle in the range will have a step-up equalizing gear since it will only be possible to transmit enough power through the gearbox by running it faster. This follows from the equation:

$$P = T \cdot w = T \cdot 2\pi n \qquad (1)$$

where
   P=power
   T=torque
   w=angular velocity
   n=speed in revolutions per second

Overspeeding the gearbox will result in increased wear but wear is directly proportional to speed whereas it is proportional to the third power of torque. Thus a 10% increase in speed reduces the life of the gearbox by around 10% whereas a 10% increase in torque would reduce the life by 25%. Thus an important concept in the invention is that it is acceptable to get increased power through the gearbox by speeding it up but not by overloading it (increasing torque). The reduction in life caused by speeding up is acceptable because of the major decrease in construction costs.

Application of the principle explained above leads to a requirement for high step-down ratios in the final drive reduction units which can be referred to more briefly as axle gears. For this reason, each axle gear is a two-stage planetary unit, although it may be found possible to construct the smallest vehicle of a range with a single stage axle gear.

Various possible constructions for the axle gears are described below including a preferred construction in which the two stages are stages of a single, stepped epicyclic gear, as well as constructions in which the two stages are two cascaded epicyclic gears.

The invention will now be described in more detail, by way of example, with reference to the accompanying drawings, in which:

Figure 1 is a schematic plan view of an embodiment of the invention,

Figure 2 is a less detailed schematic plan view of a second embodiment of the invention,

Figure 3 is a schematic elevation of a preferred axle drive,

Figure 4 is a view like Figure 3 showing a modified form of the axle drive for a higher power vehicle in a range,

Figure 5 is a view similar to Figure 3 showing the use of the axle gear on a steering axle, and

Figures 6, 7 and 8 are schematic elevations of three alternative axle drives with two epicyclic gears.

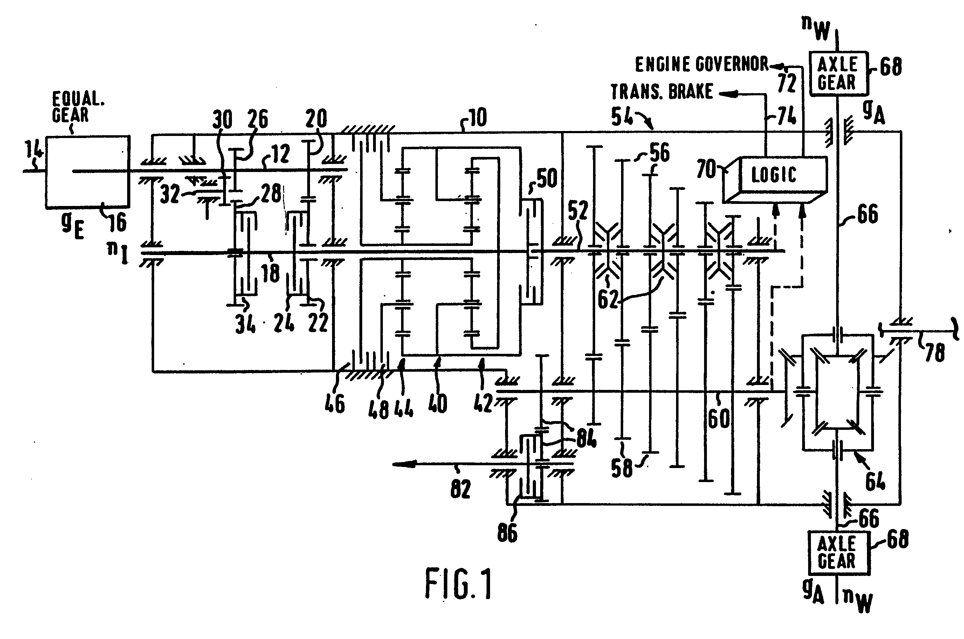

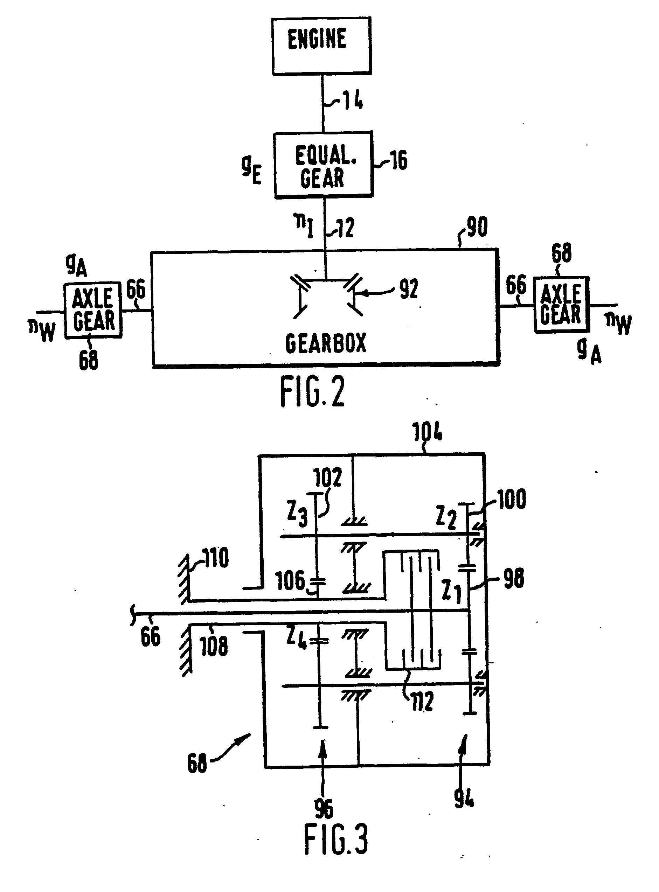

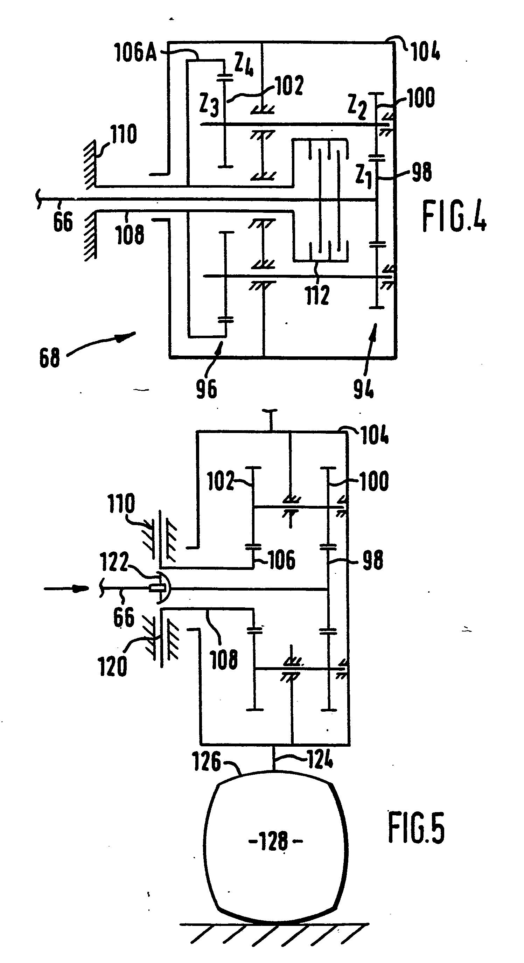

Referring to Figure 1, a main gearbox 10 has an input shaft 12 which is not driven directly by the engine; rather the engine shaft 14 is coupled to the input shaft 12 through an equalizing gear 16 which has a fixed ratio, as explained below and which may consist of two spur gears or an epicyclic gear, for example. Although shown as a separate unit, it is within the scope of the invention to incorporate the equalizing gear 16 in the gearbox 10. The latter will be essentially the same from vehicle to vehicle but will, for example, have different size spur gears keyed on the shafts 14 and 12 in input chamber of the gearbox housing.

Another possibility is to incorporate the equalizing gear between the input shaft 12 and a second shaft 18 coupled by spur gears 20, 22 and a forward clutch 24 and also coupled by spur gears 26, 28 30 (the gear 30 being a reversing gear on a countershaft 32) and a reverse clutch 34. The clutches 24 and 34 are the main clutches engageable under load. The equalizing gear can be constructed by choosing the correct number of teeth for the gears 20, 22, 26, 28 and 30.

The second shaft 18 is the input shaft to a range gear 40 comprising two epicyclic gears 42 and 44 with corresponding brakes 46 and 48 and a direct drive clutch 50 to the input shaft 52 of a change-speed gear 54. The gear 54 is a six-speed constant mesh, synchromesh gear with input gears 56 loose on the shaft 52 and output gears 58 rotationally fast with an output shaft 60. Synchronised dog clutch coupling sleeves 62 allow any input gear 56 to be clutched to the input shaft 52. The output shaft 60 drives a conventional bevel gear differential 64 with left and right output half shafts 66. The shafts 66 drive a pair of wheels of a tractor by way of respective axle gears 68, the construction of which will be described in more detail below.

The particular form of the gearbox 10 forms no part of the present invention. The gearbox illustrated in Figure 1 has been described as a typical example of a gearbox for an agricultural tractor, with which the invention may be employed. The range gear 40 (three speeds) and the change-speed gear 54 (six speeds) provide a total of 18 speeds in forward or reverse, depending upon which of the clutches 24 and 34 is engaged. Additional features of the gearbox may be mentioned briefly. Firstly, synchronisation can be assisted by a logic circuit 70 which responds to the relative speeds of the change-speed gear input and output shafts 52 and 60 to promote synchronisation by emitting signals on lines 72 and 74. The line 72 is connected to the engine governor and the engine is speeded up, as appropriate, when the gear is changed down. The line 74 is connected to a brake 46 or 48 acting on the transmission in the sense of slowing down the drive gear in the case of an upchange of gear.

There is provision for a mechanical front wheel drive via a shaft 82 coupled to the output shaft 60 by gears 84 and a clutch 86.

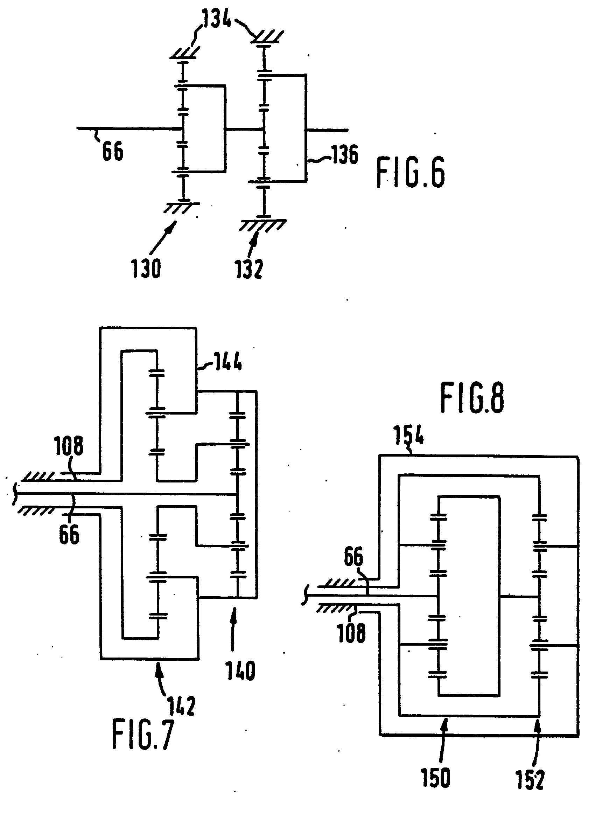

Figure 2 is a schematic diagram of an alternative embodiment which employs a transverse gearbox 90 with input drive via bevel gears 92. The gearbox 90 may be constructed as described in our copending European patent application No. 82 306 452.2. As shown in Figure 2 an equalizing gear 16 is incorporated between the engine shaft 14 and the gearbox input shaft 12. Once again it is possible to incorporate the equalizing gear in the gearbox itself, e.g. by suitable adaptation of the bevel gears 92. In any event, the gearbox 10 of Figure 1 and the gearbox 90 of Figure 2 is for the most part at least identical from vehicle to vehicle throughout the range of vehicles. Before considering the construction of the axle gears 68 it will be convenient to consider the torque and speed conditions for a range of vehicles and, by way of example, it is assumed that the range extends from a 50 kW vehicle up to a 100 kW vehicle. The following table gives the powers of the vehicles in the range for the cases of 3, 4, 5 and 6 vehicles in the range, assuming in each case that the powers form a geometrical progression.

TABLE 1

| 3 | 4 | 5 | 6 |
|---|---|---|---|
| 50 kW | 50 kW | 50 kW | 50 kW |
| 70 kW | 62 kW | 60 kW | 57 kW |
| 100 kW | 80 kW | 70 kW | 66 kW |
| | 100 kW | 84 kW | 75 kW |
| | | 100 kW | 87 kW |
| | | | 100 kW |

For simplicity the case of a range of three vehicles will be considered in what follows. It will be convenient to refer to high power, medium power and low power vehicles and to employ the subscripts H, M and L to denote parameters of these vehicles respectively. The following assumptions are made.

Engine speed (nominal) for all vehicles 2200 rpm.

Vehicle speed (all vehicles) 1.5 to 30 km/h

Table 2 gives a suitable set of vehicle speeds for the case of an 18-speed gearbox 10 or 90, in km/h and without the engine speed pulled down by a load.

TABLE 2

| Change speed gear \ Range gear | 1 | 2 | 3 |
|---|---|---|---|
| 1 | 1.5 | 1.95 | 2.54 |
| 2 | 3.15 | 4.10 | 5.33 |
| 3 | 4.94 | 6.43 | 8.36 |
| 4 | 7.02 | 9.13 | 11.87 |
| 5 | 11.17 | 14.52 | 18.87 |
| 6 | 18.65 | 24.25 | 31.50 |

Driven wheel tyre radii:

$$R_H = 0.905 \text{ m}$$

$$R_M = 0.855 \text{ m}$$

$$R_L = 0.770 \text{ m}$$

The speeds of the driven wheels in rpm, for a top speed of 30 km/h, are given by the following equation:

$$n=\frac{30.1000}{2\pi R.60}$$

and we therefore have

$$n_{WH}=88 \text{ rp}$$

$$n_{WM}=93 \text{ rpm}$$

$$n_{WL}=103 \text{ rpm}$$

where the subscript W denotes wheel speed, as indicated in Figures 1 and 2.

Application of equation 1 for an engine speed of 2200 rpm shows that the engine torques must be as follows (for powers of 100 kW, 70 kW and 50 kW):

$$T_H=435 \text{ Nm}$$

$$T_M=305 \text{ Nm}$$

$$T_L=218 \text{ Nm}$$

It is further assumed that the gearbox 10 or 90 is designed for an input torque of 340 Nm. Now, a step-up equalizing gear, with an output to input torque gear ratio of less than unity, will reduce torque while a step-down equalizing gear, with an output to input torque gear ratio of more than unity, will increase torque. It can readily be seen that the required equalizing gear ratios $g_E$ are as follows:—

$$1/g_{EH}=0.78 \quad \text{Gearbox torque}$$
$$=(435) \cdot (0.78)=340.\text{Nm}$$

$$1/g_{EM}=1.11 \quad \text{Gearbox torque}$$
$$=(305) \cdot (1.11)=340 \text{ Nm}$$

$$1/g_{EL}=1.56 \quad \text{Gearbox torque}$$
$$=(218) \cdot (1.56)=340 \text{ Nm}$$

The input speeds (subscript I) to the main gearbox are therefore as follows (the gear ratio being the reciprocal of the torque ratio):

$$n_{IH}=2200/0.78=2820 \text{ rpm}$$

$$n_{IM}=2200/1.11=1982 \text{ rpm}$$

$$n_{IL}=2200/1.56=1410 \text{ rpm}$$

It will further be assumed that the top gear (31.50≈30 km/h) is equivalent to direct drive. It then follows that the step-down axle gears 68 must have output to input speed ratios $g_A$ as follows:

$$g_{AH}=\frac{88}{2820}=1/32.0$$

$$g_{AM}=\frac{93}{1982}=1/21.3$$

$$g_{AL}=\frac{103}{1410}=1/13.6$$

Although a ratio of 1/13.6 can be achieved with a single epicyclic stage, the ratios 1/32 and 1/21.3 require two stages and it is preferred to use two-stage axle gears 68 for all vehicles for unity of design and maximum use of identical parts.

The preferred form of axle drive is shown in Figure 3 and the reasons why it is preferred will be explained in due course. The illustrated gear is a single epicyclic gear split into first and second stages 94 and 96. The half shaft 66 extending from the differential in the main gearbox 10 or 90 carries the sun wheel 98 with a number of teeth $Z_1$. (No attempt has been made in Figure 3 to show the relative sizes of the gears.) The first stage sun wheel 98 meshes with the first stage planet wheels 100 which are rotationally fast with second stage planet wheels 102 and are mounted in a common planet carrier 104. The planet carrier forms the output element of the gear and preferably constitutes the hub of a driven wheel. Thus spokes or a wheel disc may be fixed directly to the planet carrier 104 and connect the planet carrier to the wheel rim. The planet wheels 100 and 102 have tooth numbers $Z_2$ and $Z_3$ respectively. The third element of the epicyclic gear is not a conventional annulus but is a sun wheel 106 of the second stage 96 fixed to a support sleeve 108 which is, in turn, fixed to the frame of the vehicle as indicated at 110. The sleeve 108 thus constitutes the mounting for the axle drive 68 and the wheel integral therewith. Moreover, a brake 112 is conveniently accommodated inside the axle drive 68 between the first and second stages 94 and 96. The second stage sun wheel has a tooth number $Z_4$.

The behaviour of an epicyclic gear is described by the equation:

$$n_A=n_c(1+g)-n_sg \quad\quad (3)$$

where $n_A$, $n_c$ and $n_s$ are the speeds of the annulus, planet carrier and sun wheel respectively and $g$ is the step down ratio from sun wheel to annulus with the carrier fixed. Here the "annulus" is actually the second sun wheel 106, which is fixed so that $n_A=0$. From equation (3)

$$n_sg=n_c(1+g)$$

and

$$\frac{n_c}{n_s}=\frac{g}{1+g}$$

$n_c/n_s$ corresponds to the axle drive gear ratio $g_A$ derived above and the required values of g are as follows:

$g_{AH}=1/32.0$　　　$g_H=1/31$

$g_{AM}=1/21.3$　　　$g_M=1/20.3$

$g_{AL}=1/13.6$　　　$g_L=1/12.6$

The ratio $g$ for the gear shown in Figure 3 is readily seen to be given by:

$$g=\frac{Z_1}{Z_2}\cdot\frac{Z_3}{Z_4}$$

There is another constraint in that the algebraic sum of $Z_1$ and $Z_2$ must equal the algebraic sum of $Z_3$ and $Z_4$. It is found possible to achieve values of $g$ very close to the desired $g_H$, $g_M$ and $g_L$ given above with $Z_1$ and $Z_2$ the same in all the axle gears. Specifically if $Z_1=13$ and $Z_2=65$ the following values can be set up:

$$g_H=\frac{13}{65}\cdot\frac{15}{93}=\frac{1}{31}$$

$$g_M=\frac{13}{65}\cdot\frac{15}{63}=\frac{1}{21}\approx\frac{1}{20.3}$$

$$g_L=\frac{13}{65}\cdot\frac{22}{56}=\frac{1}{12.7}\approx\frac{1}{12.6}$$

Note that $(13+65)=(15+63)=(22+56)=(93-15)$.

It follows that, in the case of the high power vehicle, the gear with $Z_4$ teeth is no longer a sun wheel 106 as shown in Figure 3 but must be an annulus 106A as shown in Figure 4. The axle gear of Figure 3 employed for the low and medium power vehicles has the planet carrier 104 rotating in the opposite direction to the half shaft 66 but in the gear for the high power vehicle (Figure 4) the planet carrier 104 rotates in the same direction as the half shaft 66. It is necessary to take account of this by a compensating reversal elsewhere in that the transmission for the high power vehicle, by rearrangement of a bevel gear, as is well known. In the case of Figure 1, one possibility is to invert the differential 64 laterally. In the case of Figure 2 the forward and reverse clutches which transmit drive from the bevel gears 92 can become the reverse and forward clutches respectively.

Figure 5 shows how an axle gear similar to that of Figure 3, but with the brake 112 omitted, can be applied to a steering axle. The gear of Figure 4 can be treated in the same way. The supporting sleeve 108 is no longer rigidly fixed to the frame 110 but is attached by a vertical pivot 120. A universal joint 122 is incorporated in the half shaft 66 in line with the pivotal axis. Figure 5 also shows a wheel disc 124 fixed to the planet carrier 104 and extending out to the wheel rim 126 carrying the tyre 128.

Although the main gearbox 10 is not overloaded because the correct input torque is established by the equalizing gear 16, the axle gears 68 clearly have to be able to handle whatever wheel torque is necessary for the size of the vehicle. Accordingly the axle gears for higher power vehicles are desirably built more strongly than those for lower power vehicles. In particular it is desirable to increase the number of planet wheels 100 and 102 going up the power range. There may be 2, 3, 4 or even 5 planet wheel sets, according to the vehicle power. This principle can be applied also to the alternative axle gears now to be described.

The axle gear described with reference to Figures 3 to 5 is preferred for reasons which will be explained below but other two-stage constructions are possible and will be briefly described. Figure 6 shows a gear comprising cascaded epicyclic gears 130 and 132 driven on the sun wheels and having fixed annuli 134. The output is from the planet carrier 136 of the second stage 132. A disadvantage of this construction is that it does not lend itself to incorporation in the wheel as the hub of the wheel itself, unless more complex constructions are adopted, such as those illustrated in Figures 7 and 8, where the output planet carrier is integral with an outer drum enclosing a fixed inner drum.

Figure 7 shows first and second epicyclic gears 140, 142 with input to the sun wheel of the first stage. The planet carrier of the first stage 140 drives the sun wheel of the second stage 142 and output is from a drum structure 144 incorporating both the annulus of the first stage and the planet carrier of the second stage. The annulus of the second stage is fixed to a sleeve corresponding to the sleeve 108 of Figure 3. Although the drum structure 144 can act as a wheel hub, it will be seen that the construction is complex compared with Figure 3. This is also the case in Figure 8 where there are first and second epicyclic gears 150 and 152 with input to the sun wheel of the first stage and output from an outer drum structure 154 serving as the second stage planet carrier. The first stage annulus drives the second stage sun wheel and the fixed support sleeve 108 carries the first stage planet carrier and the second stage annulus.

The advantages of the preferred embodiment of Figures 3 and 4 will now be apparent. Only a single drum (planet carrier 104) is required and this readily acts as wheel hub. The number of gear wheels is reduced since each stage 94 and 96 lacks either an annulus or a sun wheel. In the case of Figure 3, there are no annuli and the planet carrier drum 104 can therefore be of relatively small diameter, suitable for incorporation in a correspondingly small wheel for a low power vehicle. A brake 112 is readily incorporated in the axle gear. The axle gear is suitable not only for fixed axles but also steering axles.

A steering axle can have a trailing angle of at least 10° and a drop of 1 to 2°.

**Claims**

1. A range of vehicles having different engine powers and possibly also different driven road wheel diameters, the vehicles having transmissions including gearboxes (10 or 90) and final drive reduction units (68), and equalizing gears (16) preceding or incorporated in an input section of the gearbox, characterised in that the gearboxes (10 or 90) are substantially identical throughout the range, the equalizing gears are such that the torques at the outputs of the equalizing gears is substantially the same for each vehicle in the range, and in that the final drive reduction units (68) have different ratios such as to equalize the road speeds of the vehicles of the range.

2. A range of vehicles according to claim 1, characterised in that each final drive reduction unit (68) is a two-stage (94, 96) planetary unit, at least for the higher power vehicles of the range.

3. A range of vehicles according to claim 2, characterised in that the two stages (94, 96) of the final drive reduction units (68) have planet wheels (100, 102) fixed to rotate together in a common carrier (104) forming a wheel hub, the input stage (94) has a sun wheel (98) driven by the corresponding axle shaft (66) and is of uniform construction, while the output stage (96) has a rotationally fixed sun wheel (106) for a lower power vehicle in the range, and has a rotationally fixed annulus (106A) for a higher power vehicle in the range.

4. A range of vehicles according to claim 1, 2 or 3, wherein the gearbox (10 or 90) has an input shaft (12) coupled to a second shaft (18) which is in turn coupled to an output shaft (60) by a range gear (40) and a change-speed gear (54), characterised in that the equalizing gear is formed by gears between the input shaft (12) and the second shaft (18).

5. A range of vehicles according to claim 2, characterised in that the two stages (94, 96) have rotationally fast planet wheels (100, 102) in a common planet carrier (104) and in that each stage lacks either an annulus or a sun-wheel.

6. A range of vehicles according to claim 5, characterised in that the common planet carrier (104) serves also as a wheel hub.

7. A range of vehicles according to claim 5 or 6, characterised in that the second stage (96) has a fixed element (106 or 106A) on a sleeve (108) which attaches the unit (68) to the vehicle.

8. A range of vehicles according to claim 7, characterised in that the sleeve (108) is attached by a vertical pivot (120) to form a steering axle, and in that the input shaft (66) to the unit (68) incorporates a universal joint (122).

9. A range of vehicles according to claim 7 or 8, characterised by a brake (112) in the common planet carrier acting between the sleeve (108) and a movable part of the epicyclic gear.

10. A range of vehicle transmissions according to any of claims 2 to 9, characterised in that the number of planet wheels in the final drive reduction units (68) increases up the power range.

11. A range of vehicle transmissions according to any preceding claim, characterised in that the equalizing gear is combined with a reversing gear.

12. A range of vehicle transmissions according to any preceding claim, characterised in that the equalizing gear is combined with a reversing bevel gear drive into a transverse gearbox driven from a longitudinal engine shaft.

**Patentansprüche**

1. Satz von Fahrzeugen, die unterschiedliche Maschinenleistungen und möglicherweise auch unterschiedliche Durchmesser der Laufräder aufweisen, wobei die Fahrzeuge Transmissionen, welche Rädergetriebe (10 oder 90) und Achsantriebsreduziereinheiten (68) umfassen, und Ausgleichsgegtriebe (16) aufweisen, welche einen Eingangsabschnitt des Rädergetriebes vorgeschaltet oder in diesem aufgenommen sind, dadurch gekennzeichnet, daß die Rädergetriebe (10 oder 90) innerhalb des Satzes im wesentlichen identisch sind, die Ausgleichsgetriebe derart sind, daß die Drehmomente an den Ausgängen der Ausgleichsgetriebe im wesentlichen die gleichen für jedes Fahrzeug des Satzes sind, und daß die Achsantriebsreduziereinheiten (68) unterschiedliche Verhältnisse aufweisen, derart, daß die Straßengeschwindigkeiten der Fahrzeuge des Satzes ausgeglichen werden.

2. Satz von Fahrzeugen nach Anspruch 1, dadurch gekennzeichnet, daß jede Achsantriebsreduziereinheit (68) eine zweistufige (94, 96) Planetenradeinheit wenigstens für die Fahrzeuge des Satzes mit höherer Leistung ist.

3. Satz von Fahrzeugen nach Anspruch 2, dadurch gekennzeichnet, daß die beiden Stufen (94, 96) der Achsantriebsreduziereinheiten (68) Planetenräder (100, 102) aufweisen, die so befestigt sind, daß sie zusammen in einem gemeinsamen Träger (104) rotieren, der eine Radnabe bildet, wobei die Eingangsstufe (94) ein Sonnenrad (98) aufweist, das durch die korrespondierende Achswelle (66) angetrieben wird und von gleichförmiger Konstruktion ist, während die Ausgangsstufe (96) ein drehfestes Sonnenrad (106) für ein Fahrzeug in dem Satz von niedrigerer Leistung, und einen drehfesten Ring (106A) für ein Fahrzeug innerhalb des Satzes mit höherer Leistung aufweist.

4. Satz von Fahrzeugen nach Anspruch 1, 2 oder 3, bei dem das Rädergetriebe (10 oder 90) eine Eingangswelle (12) aufweist, die mit einer zweiten Welle (18) gekuppelt ist, welche wiederum mit einer Ausgangswelle (16) über ein Bereichsgetriebe (40) und ein Geschwindigkeitswechselgetriebe (54) gekuppelt ist, dadurch gekennzeichnet, daß das Ausgleichsgetriebe durch Räder zwischen der Eingangswelle (12) und der zweiten Welle (18) gebildet ist.

5. Satz von Fahrzeugen nach Anspruch 2, dadurch gekennzeichnet, daß die beiden Stufen (94, 96) drehfeste Planetenräder (100, 102) in einem gemeinsamen Planetenradträger (104) aufweisen, und daß jeder Stufe entweder ein Ring oder ein Sonnenrad fehlt.

6. Satz von Fahrzeugen nach Anspruch 5, dadurch gekennzeichnet, daß der gemeinsame Planetenradträger (104 auch als Radnabe dient.

7. Satz von Fahrzeugen nach Anspruch 5 oder 6, dadurch gekennzeichnet, daß die zweite Stufe (96) ein festes Element (106 oder 106A) auf einer Hülse (108) aufweist, durch welche die Einheit (68) an dem Fahrzeug angebracht ist.

8. Satz von Fahrzeugen nach Anspruch 7, dadurch gekennzeichnet, daß die Hülse (108) durch ein vertikales Gelenk angebracht ist, um eine Lenkachse zu bilden und daß die Eingangswelle (66) für die Einheit (68) ein Universalgelenk (122) aufweist.

9. Satz von Fahrzeugen nach Anspruch 7 oder 8, gekennzeichnet durch eine Bremse (112) in dem gemeinsamen Planetenradträger, die zwischen der Hülse (108) und einem beweglichen Teil des epizyklischen Getriebes wirksam ist.

10. Satz von Fahrzeugtransmissionen nach irgendeinem der Ansprüche 2 bis 9, dadurch gekennzeichnet, daß die Zahl der Planetenräder in den Achsantriebsreduziereinheiten (68) im Leistungsbereich zunehmen.

11. Satz von Fahrzeugtransmissionen nach irgendeinem der voranstehenden Ansprüche, dadurch gekennzeichnet, daß das Ausgleichsgetriebe mit einem Umkehrgetriebe kombiniert ist.

12. Satz von Fahrzeugtransmissionen nach irgendeinem der voranstehenden Ansprüche, dadurch gekennzeichnet, daß das Ausgleichsgetriebe mit einem Umkehr-Kegelradantrieb in einem von einer längsverlaufenden Maschinenwelle getrieben querliegenden Rädergetriebe kombiniert ist.

**Revendications**

1. Gamme de véhicules ayant des moteurs de puissance différente et éventuellement également des roues porteuses entraînées de diamètre différent, les véhicules comportant des transmissions qui comprennent des boîtes de vitesses (10 ou 90) et des ensembles réducteurs terminaux d'entraînement (68), et des mécanismes égalisateurs (16) qui précèdent une section d'entrée de la boîte de vitesses ou sont incorporés dans celle-ci, caractérisée en ce que les boîtes de vitesses (10 ou 90) sont sensiblement identiques dans toute la gamme, les mécanismes égalisateurs sont tels que les couples aux sorties des mécanismes égalisateurs sont sensiblement les mêmes pour chaque véhicule dans la gamme, et en ce que les ensembles réducteurs terminaux d'entraînement (68) ont des rapports différents de façon à égaliser les vitesses de roulement des véhicules de la gamme.

2. Gamme de véhicules suivant la revendication 1, caractérisée en ce que chaque ensemble réducteur terminal d'entraînement (68) est un ensemble planétaire à deux étages (94, 96), au moins pour les véhicules de plus forte puissance de la gamme.

3. Gamme de véhicules suivant la revendication 2, caractérisée en ce que les deux étages (94, 96) des ensembles réducteurs terminaux d'entraînement (68) comportent des satellites (100, 102) fixés de manière à tourner ensemble dans un porte-satellites commun (104) constituant un moyeu de roue, l'étage d'entrée (94) comporte un planétaire (98) entraîné par l'arbre d'essieu correspondant (66) et il est de construction uniforme, tandis que l'étage de sortie (96) comporte un planétaire (106) fixe en rotation, pour un véhicule de plus faible puissance dans la gamme, et comporte une couronne dentée (106A) fixe en rotation, pour un véhicule de plus forte puissance dans la gamme.

4. Gamme de véhicules suivant la revendication 1, 2 ou 3, dans laquelle la boîte de vitesses (10 ou 90) comporte un arbre d'entrée (12) relié à un deuxième arbre (18) qui est lui-même relié à un arbre de sortie (60) par un mécanisme de sélection de gamme (40) et un mécanisme de changement de vitesses (54), caractérisée en ce que le mécanisme égalisateur est constitué par des engrenages placés entre l'arbre d'entrée (12) et le deuxième arbre (18).

5. Gamme de véhicules suivant la revendication 2, caractérisée en ce que les deux étages (94, 96) comportent des satellites (100, 102) solidaires en rotation dans un porte-satellites commun (104) et en ce qu'il manque dans chaque étage une couronne dentée ou un planétaire.

6. Gamme de véhicules suivant la revendication 5, caractérisée en ce que le porte-satellites commun (104) sert également de moyeu de roue.

7. Gamme de véhicules suivant la revendication 5 ou 6, caractérisée en ce que le deuxième étage (96) comporte un élément (106 ou 106A) fixé sur un manchon (108) qui tient l'ensemble (68) sur le véhicule.

8. Gamme de véhicules suivant la revendication 7, caractérisée en ce que le manchon (108) est fixé à un pivot vertical (120) pour former une fusée de direction, et en ce que l'arbre d'entrée (66) à l'ensemble (68) contient un joint universel (122).

9. Gamme de véhicules suivant la revendication 7 ou 8, caractérisée en ce qu'un frein (112) est prévu dans le porte-satellites commun et agit entre le manchon (108) et une partie mobile du train épicycloïdal.

10. Gamme de transmissions de véhicule suivant l'une quelconque des revendications 2 à 9, caractérisée en ce que le nombre de satellites dans les ensembles réducteurs terminaux d'entraînement (68) augmente lorsqu'on s'élève dans la gamme de puissance.

11. Gamme de transmissions de véhicule suivant l'une quelconque des revendications précédentes, caractérisée en ce que le mécanisme égalisateur est combiné avec un mécanisme inverseur.

12. Gamme de transmissions de véhicule suivant l'une quelconque des revendications précédentes, caractérisée en ce que le mécanisme égalisateur est combiné avec un entraînement à pignons coniques d'inversion, dans une boîte de vitesses transversale entraînée par un arbre de moteur longitudinal.

FIG.1

FIG.2

FIG.3

2

0 111 037

FIG.4

FIG.5

3

FIG.6

FIG.8

FIG.7